# Europäisches Patentamt
# European Patent Office
# Office européen des brevets

(11) Numéro de publication: **0 061 370**
**B1**

(12) **FASCICULE DE BREVET EUROPÉEN**

(45) Date de publication du fascicule du brevet:
26.11.86

(21) Numéro de dépôt: 82400353.7

(22) Date de dépôt: 02.03.82

(51) Int. Cl.⁴: **B 64 D 1/16**, B 64 C 31/02

(54) **Appareil pour l'épandage aérien.**

(30) Priorité: 06.03.81 FR 8104491

(43) Date de publication de la demande:
29.09.82 Bulletin 82/39

(45) Mention de la délivrance du brevet:
26.11.86 Bulletin 86/48

(84) Etats contractants désignés:
AT BE CH DE GB IT LI LU NL SE

(56) Documents cité:
FR-A-1 469 662
FR-A-2 372 082
FR-A-2 430 196

(73) Titulaire: Perinet, Roland Jean Yvon, Route de
Poitiers, F-86110 Mirebeau (FR)

(72) Inventeur: Perinet, Roland Jean Yvon, Route de
Poitiers, F-86110 Mirebeau (FR)

(74) Mandataire: Lepeudry- Gautherat, Thérèse,
Armengaud Jeune Cabinet Lepeudry 23
boulevard de Strasbourg, F-75010 Paris (FR)

EP 0 061 370 B1

## Description

La présente invention concerne un appareil pour l'épandage aérien qui trouve tout naturellement une application privilégiée dans le domaine agricole.

Le traitement des cultures et même l'apport d'engrais sont réalisés par épandage terrestre, c'est-à-dire au moyen d'appareils montés sur un tracteur, tractés et parfois même encore portés à dos d'homme, ou par épandage aérien à partir d'avions ou d'hélicoptères.

L'avion a en effet été utilisé très tôt pour épandre des produits notamment dans les régions de grandes cultures comme aux Etats-Unis, car il permet seul de traiter de grandes superficies dans un minimum de temps. L'hélicoptère, tel que décrit dans le FR-A-1 469 662 et corespondant au préambule de la revendication 1 permet, quant à lui, de traiter des cultures situées dans des endroits difficiles d'accès ou quand la configuration du champ n'est pas régulière.

L'emploi de ces moyens aériens augmente le coût de revient de ces traitements, et, ce en particulier dans le cas de l'hélicoptère, ce qui ne peut être justifié que si la culture procure une plus-value importante ou si le gain par rapport aux modes traditionnels de traitement est en rapport.

En outre, l'avion est tributaire de terrains d'aviation, de même que l'hélicoptère, qui, en plus, réclame une maintenance de qualité.

Lorsque l'on utilise ces aéronefs, l'épandage ne peut avoir lieu que durant la phase de vol horizontal et non lors des virages, ce qui est également une cause supplémentaire de frais: le temps nécessaire à virer est du temps perdu.

On sait que certains autres types d'aéronefs tels que décrits dans le FR-A-2 372 082, utilisent un système de pilotage par effet pendulaire dans lequel un bâti sous une voilure est muni de moteurs de propulsion qui permettent sa sustentation en vol stationnaire ou vertical ainsi que son vol de croisière. De ce fait les engins de ce type se rapprochent beaucoup des aéronefs à voilure tournante.

Aussi un but de la présente invention est-il de fournir un appareil pour l'épandage aérien qui permet d'obtenir des coûts de traitement moindres.

Un objet de l'invention est un appareil de ce type qui ne nécessite aucune structure spécifique au contraire de l'avion ou de l'hélicoptère par exemple.

Ce but et cet objet ainsi que d'autres qui apparaîtront par la suite, sont atteints par l'appareil selon la présente invention, pour l'épandage aérien qui comprend une aile volante constituée d'une voilure à laquelle est suspendu par un mat un châssis sur lequel sont situés au moins un moteur entraînant une hélice et un poste de pilotage, et un dispositif d'épandage qui est monté sur ce châssis en arrière du poste de pilotage et qui comporte une rampe de pulvérisation, au moins un réservoir pour le produit à épandre relié à une pompe entraînée par un moteur, elle-même connectée à cette rampe, et des moyens pour contrôler et/ou régler le débit et/ou la pression du produit à épandre.

De préférence, la rampe de pulvérisation est constituée de trois éléments, un monté à l'arrière du châssis et les deux autres de part et d'autre ce celui-ci de façon amovible, et elle est haubanée sur la structure de la voilure.

Selon un autre mode de réalisation de l'invention, cette rampe est fixée de façon pendulaire sur l'aile volante.

Avantageusement, cette rampe comporte en son milieu un axe transversal qui est situé dans une gorge transversale d'une pièce en U montée à l'arrière du châssis; la rampe peut ainsi pivoter autour de son axe entre les deux branches du U de cette pièce, et une des extrémités de cet axe est prolongée vers le bas par une masse.

De préférence, le ou les réservoirs sont cloisonnés.

Un tel appareil peut être piloté soit manuellement soit par télécommande à partir du sol.

La description qui va suivre et qui ne présente aucun caractère limitatif, doit permettre de mieux comprendre la mise en oeuvre ainsi que les avantages de la présente invention. Elle doit être lue en regard des figures annexées parmi lesquelles:

- la figure 1 représente, en vue de face, un premier mode de réalisation de l'invention:
- la figure 2, représente, en vue de face, un second mode de réalisation de la présente invention;
- la figure 3 est une vue arrière de l'appareil représenté sur la figure 2;
- la figure 4 montre le montage de la rampe sur le châssis de l'appareil représenté aux figures 2 et 3;
- la figure 5 est une coupe selon la ligne AA de la figure 4;
- la figure 6 représente de façon schématique le dispositif de pulvérisation.

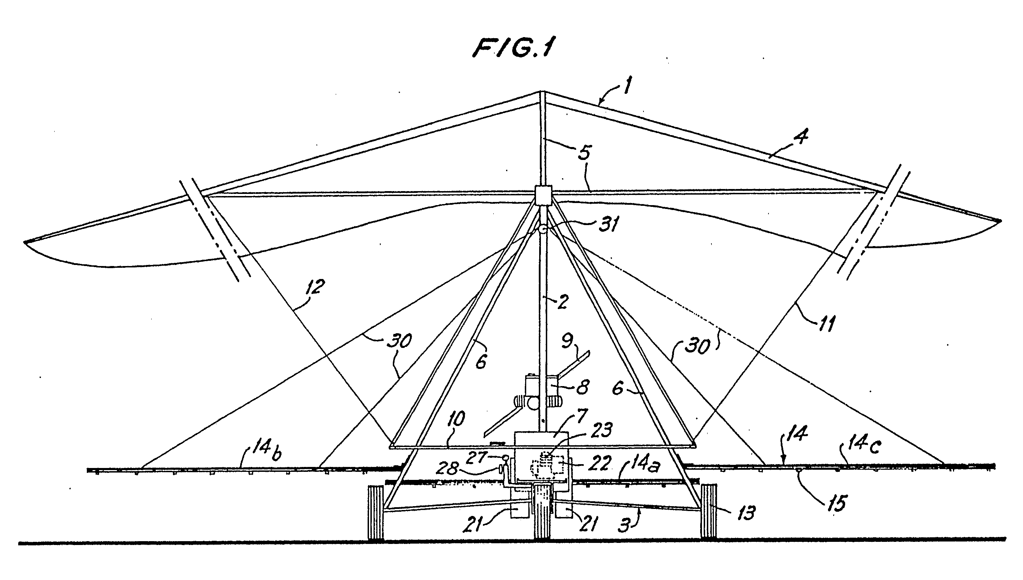

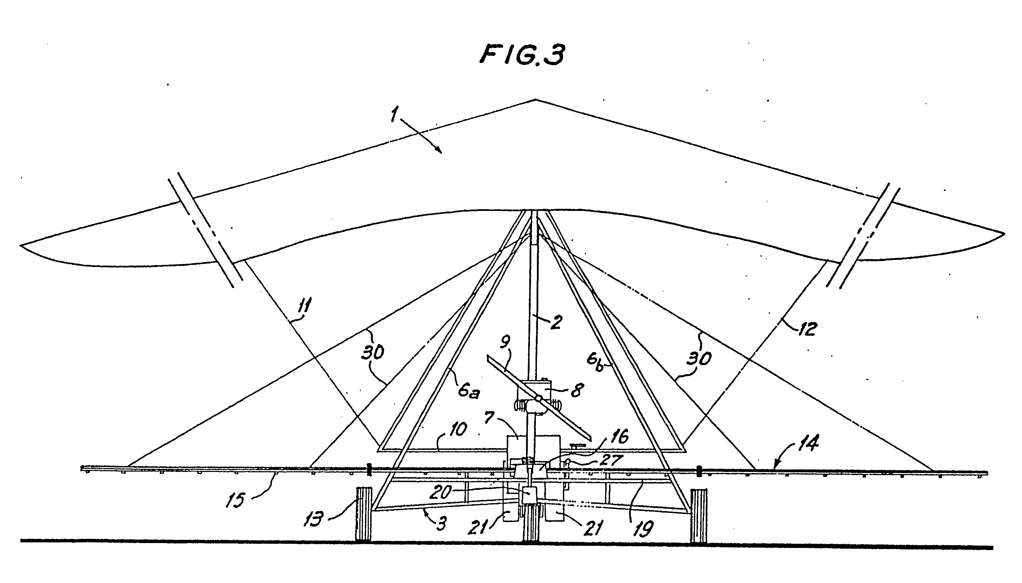

Ainsi qu'on peut le voir sur les figures 1 à 3, un appareil, selon la présente invention, pour l'épandage aérien comprend une aile volante, référencée 1 dans son ensemble, à laquelle est suspendu par l'intermédiaire d'un mât 2, un châssis 3.

Cette aile volante est constituée par une voilure 4 montée sur une superstructure 5, qui peut être repliable.

Quant au châssis 3, il est relié au mât 2 par des montants 6 qui sont au moins au nombre de trois, comme dans les modes de réalisation représentée sur les figures. Sur ce châssis 3 est disposé un siège 7 pour le pilote et, derrière celui-ci, un moteur 8 qui entraîne une hélice 9. Le moteur est rendu solidaire par tout moyen connu du mât 2.

Pour diriger l'appareil, le pilote dispose d'une barre transversale 10 montée oscillante sur le mât 2 et reliée à la superstructure 5 de l'aile volante 1 par des filins 11 et 12. Selon le cas, il peut être envisagé de monter deux moteurs entraînant chacun une hélice, sur le châssis 3, notamment lorsque l'appareil doit emporter deux pilotes. Le moteur 10 peut être du type polycombustible.

Le châssis 3 est muni de roues 13 permettant de déplacer l'appareil au sol et faisant fonction d'un train d'atterrissage. Il constitue ainsi un tricycle qui selon un mode particulier de réalisation est également repliable, conformément au modèle déposé en France le 20 juin 1980 sous le N° 11 738.

A l'arrière de ce châssis 3, donc derrière le siège 7 du pilote, est disposée une rampe 14 de pulvérisation qui comporte des buses 15 ou des diffuseurs rotatifs.

Selon un premier mode de réalisation de l'invention, qui est représentée sur la figure 1, la rampe 14 est constituée de trois éléments: un premier élément 14a situé à l'arrière même du châssis 3, et deux éléments 14b et 14c disposés de part et d'autre et montés de façon amovible sur les montants 6.

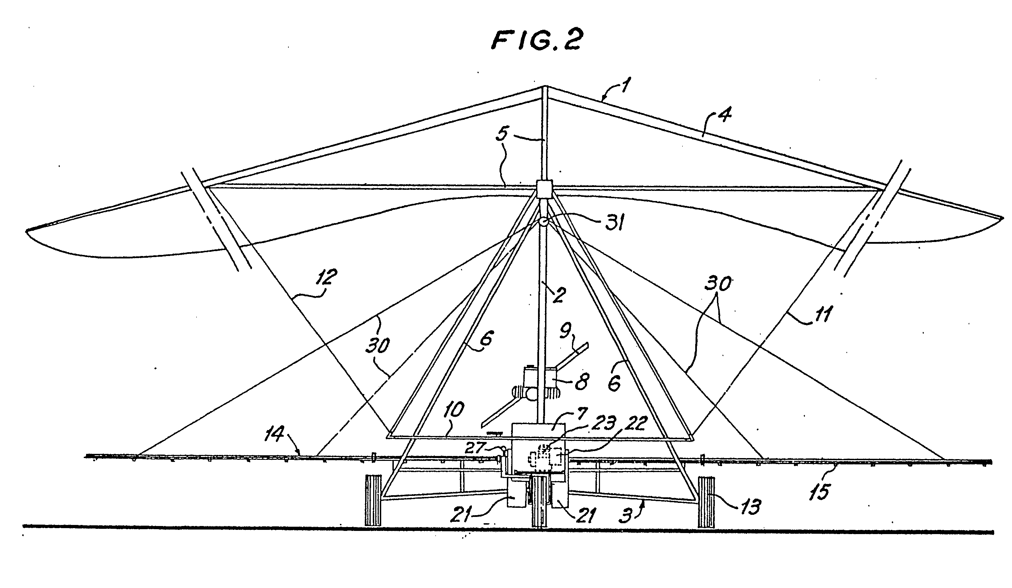

Selon un second mode de réalisation représentée sur les figures 2 à 5, la rampe 15 de pulvérisation est montée sur le châssis 3 de façon pendulaire par l'intermédiaire d'une pièce 16 en U.

Cette pièce 16, selon ce mode de réalisation, est solidaire du longeron 19 reliant les deux montants arrières 6a et 6b et est disposée en son milieu. Elle comporte une gorge transversale 17, c'est-à-dire perpendiculaire à ce longeron.

Quant à la rampe 14, elle comporte en son milieu un axe transversal 18 qui, lorsque la rampe 14 est montée dans la pièce 16, vient se loger dans la gorge 17. Du côté extérieur, cet axe 18 est prolongé vers le bas par une masse 20. Bien évidemment, à chaque extrémité de l'axe 18 on pourrait de même disposer une autre masse.

On comprend aisément que sous l'effet de cette masse 20, la rampe 14 de pulvérisation est maintenue à l'horizontale quels que soient les mouvements de l'appareil, puisqu'elle peut librement pivoter autour de son axe 18 dans la pièce 16.

Outre cette rampe 14 de pulvérisation, le dispositif d'épandage comprend au moins un réservoir 21, de préférence cloisonné, qui renferme le produit à épandre, une pompe 22 entraînée par un moteur 23 ainsi que des moyens pour contrôler et/ou régler le débit et la pression du produit à épandre.

Il est avantageux pour des raisons évidentes d'équilibre, que l'appareil comporte deux réservoirs 21. On peut même remplacer la masse 20 par un réservoir 21.

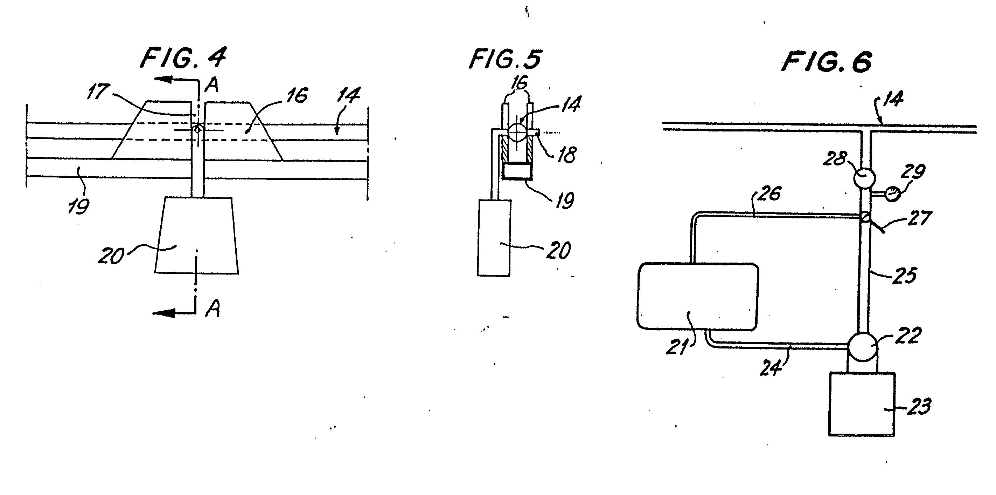

Ce réservoir 21, comme représenté sur la figure 6, est relié par un premier tuyau 24 à la pompe 22 qui est elle-même connectée à la rampe 14 par un second tuyau 25. De plus, une conduite 26 relie le réservoir 21 à ce second tuyau 26; il y a ainsi constitution possible d'un circuit fermé entre le réservoir et la pompe. En effet, comme le moteur 23 de la pompe 22 est mis en route dès le décollage, il est nécessaire qu'un tel circuit fermé existe afin de ne pas alimenter la rampe 14.

L'alimentation de la rampe 14 est commandée, par exemple, par une manette 27 qui est disposée à portée du pilote, celui-ci peut ainsi arrêter ou mettre en marche l'épandage du produit contenu dans le réservoir 21 et en régler le débit. En aval par rapport à cette manette 27, est également située sur le second tuyau 26, une commande 28 pour régler la pression d'épandage qui est mesurée par exemple par un manomètre 29 placé à ce niveau.

Quant à la pompe 22, elle est supportée par le châssis 3 et le moteur 23 qui l'entraîne, est également disposé sur ce châssis.

La rampe 14 de pulvérisation du fait de sa longueur - 6 à 12 mètres selon les besoins, par exemple est haubanée; les haubans 30 la relient à une pièce 31 situé au sommet du mât 2. Dans le cas où la rampe est montée de façon pendulaire, cette pièce 31 peut tourner librement autour de son axe de fixation sur le mât 2.

Ainsi qu'on peut le constater, on peut avec un même matériel effectuer des épandages soit en ayant réglé la pression préalablement, soit à une pression qui peut être maintenue constante grâce à la commande 28 de réglage.

Un tel appareil permet des épandages aériens des différents produits nécessaires pour traiter notamment les cultures ou, de façon plus générale toute étendue terrestre voire lacustre ou même maritime. Ces produits peuvent être liquides, solides ou gazeux. Dans ce dernier cas, on comprendra les avantages que procure cet appareil, en prenant en compte sa faible vitesse d'avancement par rapport aux aéronefs actuellement utilisés.

Par ailleurs, il y a lieu de noter que le dispositif de pulvérisation est tel que les caractéristiques de la pompe et le calibre des buses ou des diffuseurs rotatifs permettent des débits de produit à l'hectare conformes aux prescriptions des fournisseurs de ces produits. L'appareil selon la présente invention est particulièrement adapté pour des épandages à faible débit, comme par exemple de 15 à 25 litres par hectare.

Cet appareil peut être télécommandé. Pour cela il suffit d'installer sur le châssis 3 les appareillages nécessaires pour en diriger le vol ainsi que pour agir sur la manette 27 et la commande 28.

Cet appareil du fait de sa structure et de la légéreté de ces constituants est facilement démontable et par là même aisément transportable d'un lieu de traitement à un autre.

Bien évidemment, on ne sortira pas du cadre de la présente invention, en utilisant des équivalents des différents constituants de cet appareil et notamment en remplaçant la rampe 14 de pulvérisation par une rampe de micronisation, ou en entraînant la pompe 22 par tout autre moyen y compris par un des moteurs 8 servant à la propulsion.

## Revendications

1.- Appareil pour l'épandage aérien comprenant un dispositif d'épandage qui comporte une rampe (14) de pulvérisation, au moins un réservoir pour le produit à épandre relié à une pompe entraînée par un moteur, elle-même connectée à ladite rampe et des moyens pour contrôler et pour régler le débit et/ou la pression dudit produit à épandre, ledit dispositif d'épandage étant monté sur un châssis (3), caractérisé par le fait que le châssis (3) est suspendu par un mât (2) à la voilure (4) d'une aile volante, sur lequel est situé un poste de pilotage et au moins un moteur (8) entraînant une hélice (9) ledit dispositif d'épandage étant disposé en arrière dudit poste de pilotage.

2.- Appareil selon la revendication 1, caractérisé par le fait que ladite rampe (14) de pulvérisation est constituée de trois parties, une montée à l'arrière dudit châssis (3) et deux montées de façon amovible de part et d'autre de celui-ci.

3.- Appareil selon la revendication 1, caractérisé par le fait que ladite rampe (14) de pulvérisation est fixée de façon pendulaire sur ladite aile volante.

4.- Appareil selon la revendication 3, caractérisé par le fait que ladite rampe (14) comporte en son milieu un axe (18) transversal qui est situé dans une gorge (19) transversale ménagée dans une pièce (16) en U solidaire du châssis (3), une des extrémités dudit axe (18) étant prolongée vers le bas par une masse (20).

5.- Appareil selon la revendication 4, caractérisé en ce que ladite masse (20) est constituée par un réservoir (21) de produit à épandre.

6.- Appareil selon l'une quelconque des revendications 1 à 5, caractérisé en ce que ladite rampe (14) est haubanée.

7.- Appareil selon l'une quelconque des revendications 1 à 6, caractérisé en ce que le ou lesdits réservoirs (21) sont cloisonnés.

8.- Appareil selon l'une quelconque des revendications 1 à 7, caractérisé en ce qu'il est télécommandé.

## Patentansprüche

1. Anlage zum Versprühen vom Flugzeug aus mit einer Sprühvorrichtung, die eine Zerstäubungsschiene (14), wenigstens einen Vorratsbehälter für das zu versprühende Präparat, der mit einer von einem Motor angetriebenen Pumpe verbunden ist, welche mit der Zerstäubungsschiene verbunden ist, und Mittel zum Steuern und Regeln der Ausströmmenge und/oder des Druckes des zu versprühenden Präparates enthält, wobei die Sprühvorrichtung auf einem Rahmen (3) angeordnet ist, dadurch gekennzeichnet, daß an der Besegelung (4) eines Tragflügels mit einem Mast (2) der Rahmen (3) aufgehängt ist, auf welchem ein Steuerstand und wenigstens ein einen Propeller (9) antreibender Motor (8) angeordnet ist, wobei die Sprühvorrichtung hinter dem Steuerstand angeordnet ist.

2. Anlage nach Anspruch 1, dadurch gekennzeichnet, daß die Zerstäubungsschiene (14) aus drei Teilen gebildet ist, von welchen ein Teil im hinteren Bereich des Rahmens (3) angeordnet ist und von welchen zwei Teile beidseits dieses Teils beweglich angeordnet sind.

3. Anlage nach Anspruch 1, dadurch gekennzeichnet, daß die Zerstäubungsschiene (14) pendelnd an dem Tragflügel angebracht ist.

4. Anlage nach Anspruch 3, dadurch gekennzeichnet, daß die Zerstäubungsschiene (14) in ihrer Mitte eine Querachse (18) enthält, die in einer Quernut (19) angeordnet ist, die in einem fest mit dem Rahmen (3) verbundenen U-förmigen Teil (16) angebracht ist, wobei eines der Enden der Achse (18) nach unten mit einer Masse (20) verlängert ist.

5. Anlage nach Anspruch 4, dadurch gekennzeichnet, daß die Masse (20) von einem Vorratsbehälter (21) des zu versprühenden Präparates gebildet wird.

6. Anlage nach einem der Ansprüche 1 bis 5, dadurch gekennzeichnet, daß die Schiene (14) verspannt ist.

7. Anlage nach einem der Ansprüche 1 bis 6, dadurch gekennzeichnet, daß der oder die Vorratsbehälter (21) unterteilt sind.

8. Anlage nach einem der Ansprüche 1 bis 7, dadurch gekennzeichnet, daß sie ferngesteuert ist.

## Claims

1. An apparatus for aerial spreading, comprising a spreading device which consists of a spraying manifold (14), at least one reservoir for the product to be spread and connected to a motor-driven pump which itself is connected to said manifold, and means for monitoring and regulating the flow and/or pressure of said product to be spread, said spreading device being mounted on a frame (3), characterised in that the frame (3) is suspended by a strut (2) from an aerofoil (4) of a sailwing, on which is disposed a control position and at least one motor (8) driving a propeller (9), said spreading device being disposed to the rear of said control position.

2. An apparatus according to claim 1, characterised in that said spraying manifold (14) is made in three parts, one mounted to the rear of said frame (3) and two mounted detachably on either side of the latter.

3. An apparatus according to claim 1, characterised in that said spraying manifold (14) is fixed to said sailwing in pendular fashion.

4. An apparatus according to claim 3, characterised in that in its centre said manifold (14) comprises a transverse pivot (18) which is situated in a transverse groove (19) provided in a U-shaped member (16) attached to the frame (3), one end of said pivot (18) being extended downwards by a weight (20).

5. An apparatus according to claim 4 characterised in that said weight (20) comprises the reservoir (21) of product to be spread.

6. An apparatus according to any of claims 1 to 5, characterised in that said manifold (14) is braced.

7. An apparatus according to any of claims 1 to 6, characterised in that the reservoir or reservoirs (21) are compartmented.

8. An apparatus according to any of claims 1 to 7, characterised in that it is remote-controlled.

*FIG.1*

FIG.2

FIG.3

FIG.6

FIG.5

FIG.4